# EUROPEAN PATENT APPLICATION

(11) **EP 4 654 217 A1**
(43) Date of publication of application: **26.11.2025**
(21) Application number: 24732151.6
(22) Date of filing: 11.01.2024
(51) Int. Cl.: G21F 9/16, G01B 11/06

(54) **RADIOACTIVE WASTE IMMOBILIZATION DEVICE AND IMMOBILIZATION METHOD USING SAME**

(30) Priority: 19.01.2023 KR 20230007884
(71) Applicant: Korea Hydro & Nuclear Power Co., Ltd, Gyeongju-si, Gyeongsangbuk-do 38120 (KR)
(72) Inventor: HWANG, Young Hwan, Daejeon 34101 (KR); LEE, Mi Hyun, Daejeon 34101 (KR); KIM, Cheon Woo, Daejeon 34101 (KR)
(74) Representative: Glawe, Delfs, Moll
(86) International application number: PCT/KR2024/095024
(87) International publication number: WO 2024/155177

(57) **Abstract**

A radioactive waste immobilization apparatus for immobilizing radioactive waste loaded in a high-integrity container to enhance the storage safety of the radioactive waste and a radioactive waste immobilization method using the same are disclosed. A radioactive waste immobilization apparatus according to an embodiment of the present invention, which is for immobilizing the upper part of radioactive waste loaded in a high-integrity container to prevent the possibility of the radioactive waste leaking to the outside, includes: a polymer resin injection unit forming a polymer resin layer by injecting an immobilizing polymer resin onto the radioactive waste loaded in the high-integrity container; a polymer resin sensing unit adjusting an injection amount of the polymer resin by measuring a thickness of the polymer resin layer; and a light curing unit curing the polymer resin layer.

## Description

### [TECHNICAL FIELD]

The present invention relates to a radioactive waste immobilization apparatus for enhancing and improving the storage stability of radioactive waste by immobilizing the radioactive waste loaded in a high-integrity container.

### [BACKGROUND ART]

Generally, a high-integrity container for storing radioactive waste consists of a drum that holds the radioactive waste and a cover that seals the drum. Once the radioactive waste is placed in the drum, the cover is positioned correctly and secured to the drum by, for example, a coupling unit that seals the drum. Subsequently, the radioactive waste is loaded into the drum through an injection tube.

Medium- and low-level radioactive waste, which is inevitably generated in the nuclear industry, must ensure safety and integrity that meets regulatory requirements during handling and disposal, excluding very low-level radioactive materials. Methods to ensure the safety and integrity of radioactive materials include solidifying such radioactive materials or packaging them in special containers, i.e., high-integrity containers (HICs), whose safety and integrity are already ensured.

Currently, in most countries, except for a few like the United States, Korea, and China, the term "high-integrity container" is not commonly used. Additionally, the classification and stabilization requirements for waste vary by country, but it is generally recognized that a waste container capable of maintaining integrity for more than 300 years at a disposal site is necessary.

### [TECHNICAL PROBLEMS]

A high-integrity container is defined in Korea as a packaging container for radioactive waste that can maintain integrity for more than 300 years under typical underground and disposal conditions in the country. The targeted waste includes dried concentrate powder, dried waste resin, and solidified forms of concentrate and waste resin.

The problem that the present invention aims to solve is to enhance the safety of dried concentrate and waste resin loaded in a high-integrity container. That is, the present invention aims to prevent the leakage of radioactive waste in the event of an accident, such as a drop of the high-integrity container or damage to its cover, by immobilizing and sealing the top of the loaded radioactive waste.

The objectives of the present invention are not limited to the aforementioned issues, and other unstated objectives will become apparent to those skilled in the art from the following descriptions.

### [TECHNICAL SOLUTIONS]

A liquid waste removal system according to an embodiment of the present invention for achieving the above objective, which is for immobilizing the upper part of radioactive waste loaded in a high-integrity container to prevent the possibility of the radioactive waste leaking to the outside, includes: a polymer resin injection unit forming a polymer resin layer by injecting an immobilizing polymer resin onto the radioactive waste loaded in the high-integrity container; a polymer resin sensing unit adjusting an injection amount of the polymer resin by measuring a thickness of the polymer resin layer; and a light curing unit curing the polymer resin layer.

The polymer resin may include an acrylate oligomer, a monomer, and a photoinitiator.

The polymer resin sensing unit may take multiple measurements of the thickness of the polymer resin layer and adjusts the injection amount of the polymer resin using an average of the multiple measurements.

If the average of the measurements does not meet a preset thickness, the polymer resin injection unit may additionally inject the polymer resin.

The light curing unit may rotate over the polymer resin layer to cure the polymer resin layer uniformly.

The light curing unit may rotate around a center of the high-integrity container.

A liquid waste removal method according to another embodiment of the present invention for achieving the above objective, which is for immobilizing the upper part of radioactive waste loaded in a high-integrity container to prevent the possibility of the radioactive waste leaking to the outside, includes: a) forming a polymer resin layer by injecting an immobilizing polymer resin onto the radioactive waste loaded in the high-integrity container; b) adjusting an injection amount of the polymer resin by measuring a thickness of the polymer resin layer; and c) curing the polymer resin layer.

In step b), the adjusting the injection amount of the polymer resin includes taking multiple measurements of the thickness of the polymer resin layer and adjusting the injection amount of the polymer resin based on an average of the multiple measurements.

If the average of the measurements does not meet the preset thickness, the polymer resin may be additionally injected.

Step c), which cures the polymer resin layer, may be performed repeatedly.

Specific details of other embodiments are included in the detailed description and drawings.

### [ADVANTAGEOUS EFFECTS]

According to the present invention, a radioactive waste immobilization apparatus for immobilizing and sealing the upper part of radioactive waste loaded in a high-integrity container to prevent the radioactive waste from leaking to the outside in the event of an accident, such as the drop or damage of the container cover, and an immobilization method using the same can be provided.

### [BRIEF DESCRIPTION OF DRAWINGS]

FIG. 1 is a flowchart illustrating the radioactive waste immobilization method according to an embodiment of the present invention.
FIG. 2 illustrates an example of radioactive waste loaded in a high-integrity container.
FIG. 3 illustrates the injection of a polymer resin into the upper part of the radioactive waste by a polymer resin injection unit.
FIG. 4 illustrates the measurement of the thickness of a polymer resin layer by a polymer resin sensing unit.
FIG. 5 illustrates the curing of the polymer resin layer by a light curing unit.
FIG. 6 illustrates a polymer layer for immobilizing radioactive waste, formed on the radioactive waste.
FIG. 7 illustrates a plan view of a radioactive waste immobilization apparatus according to an embodiment of the present invention.

### [BEST MODE FOR CARRYING OUT THE INVENTION]

The present invention relates to relates to an apparatus for immobilizing the upper part of radioactive waste within a high-integrity container to prevent the possibility of radioactive waste leaking to the outside, comprising: a polymer resin injection unit forming a polymer resin layer by injecting an immobilizing polymer resin onto the radioactive waste loaded in the high-integrity container; a polymer resin sensing unit adjusting an injection amount of the polymer resin by measuring a thickness of the polymer resin layer; and a light curing unit curing the polymer resin layer.

### [MODES FOR CARRYING OUT THE INVENTION]

Preferred embodiments of the present invention will hereinafter be described in detail with reference to the accompanying drawings. The advantages and features of the present invention, and methods for achieving them, will become apparent with reference to the embodiments described below in detail along with the accompanying drawings. However, the present invention is not limited to the embodiments disclosed herein but can be implemented in various other forms. These embodiments are provided to make the disclosure of the present invention thorough and to fully convey the scope of the invention to those skilled in the art, and the present invention is defined only by the scope of the claims. Throughout the specification, the same reference numerals refer to the same components.

Hereinafter, a radioactive waste immobilization apparatus and a radioactive waste immobilization method using the same according to embodiments of the present invention will be described.

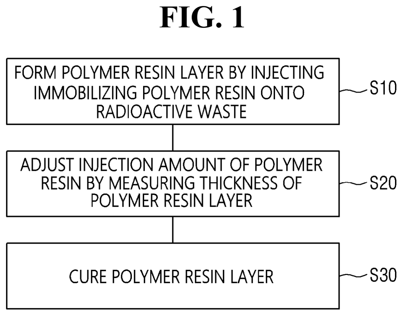

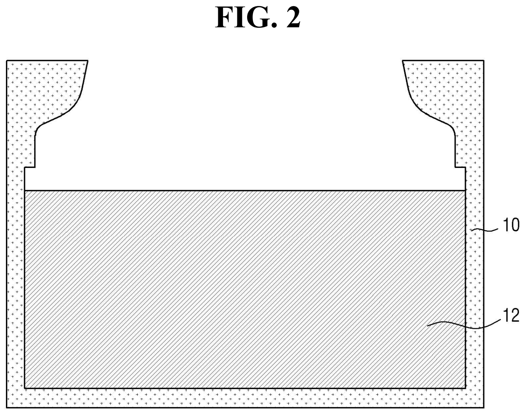

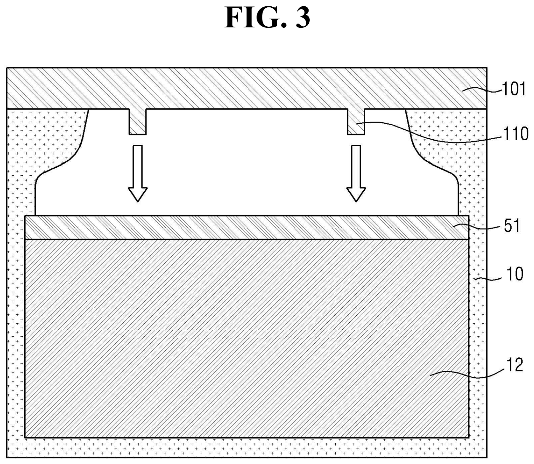

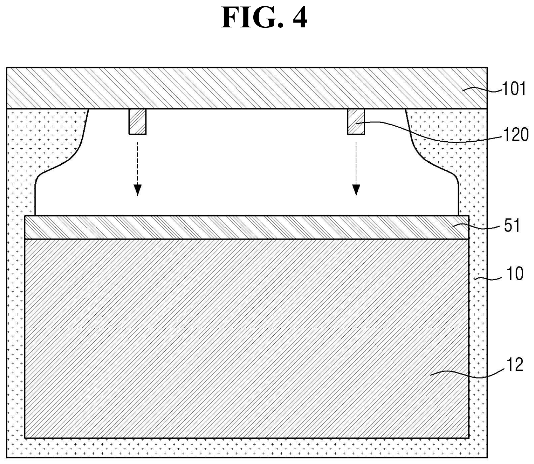

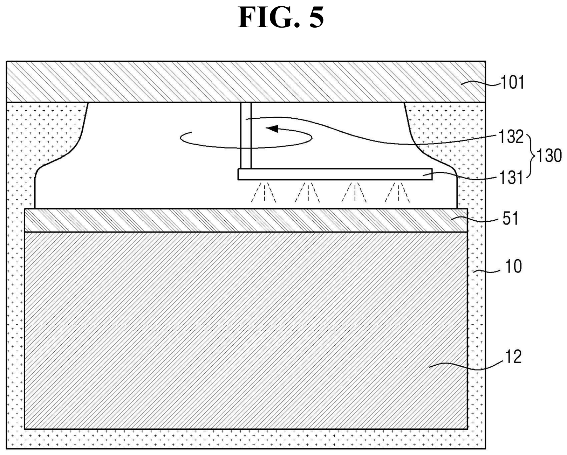

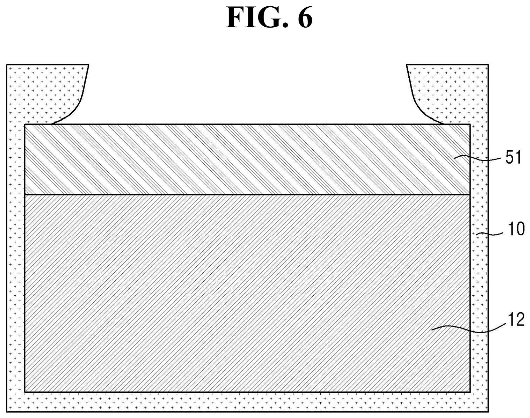

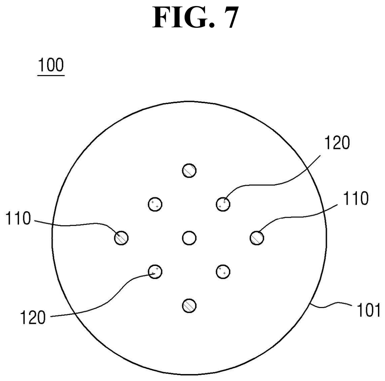

FIG. 1 is a flowchart illustrating the radioactive waste immobilization method according to an embodiment of the present invention, FIG. 2 illustrates an example of radioactive waste loaded in a high-integrity container, FIG. 3 illustrates the injection of a polymer resin into the upper part of the radioactive waste by a polymer resin injection unit, FIG. 4 illustrates the measurement of the thickness of a polymer resin layer by a polymer resin sensing unit, FIG. 5 illustrates the curing of the polymer resin layer by a light curing unit, FIG. 6 illustrates a polymer layer for immobilizing radioactive waste, formed on the radioactive waste, and FIG. 7 illustrates a plan view of a radioactive waste immobilization apparatus according to an embodiment of the present invention.

Referring to FIG. 2, radioactive waste 12 may be loaded and stored in a high-integrity container 10.

The radioactive waste 12 may be dried concentrate powder, dried waste resin, or a solidified form of concentrate and waste resin, but is not limited to waste generated from nuclear power plants.

The high-integrity container 10 may be defined as a packaging container for radioactive waste that can maintain integrity for more than 300 years under typical underground and disposal conditions in Korea. The high-integrity container 10 may consist of a cylindrical drum and a cover located at the central part of the top of the drum to seal the drum. The central part of the top of the drum may have an opening to allow for the loading of radioactive waste.

Referring to the high-integrity container 10, the exterior of the drum may be wrapped with, for example, stainless steel or carbon steel, to enhance the impact strength of the high-integrity container 10 against external impacts. In this case, it is preferable to use stainless steel or carbon steel with a thickness of 1 mm to 5 mm. Meanwhile, the high-integrity container 10 may also be formed of concrete.

Referring to FIG. 7, the radioactive waste immobilization apparatus 100 is for immobilizing the upper part of the radioactive waste 12 within the high-integrity container 10 to prevent the potential leak of the radioactive waste 12.

The radioactive waste immobilization apparatus 100 may include a main body 101, polymer resin injection units 110, which are mounted on the main body 101, polymer resin sensing units 120, which are mounted on the main body 101, and a light curing unit 130, which is mounted at the center of the main body 101.

The main body 101 may be mounted on the high-integrity container 10. Once the immobilization process for the radioactive waste 12 is completed, the radioactive waste immobilization apparatus 100 is removed from the top of the high-integrity container 10. Then, the radioactive waste immobilization apparatus 100 may be mounted on another high-integrity container 10 where the immobilization process will continue.

The main body 101 may include a polymer resin storage unit, which stores the polymer resin to be injected into the high-integrity container 10. Additionally, the main body 101 may include a control unit, which controls the polymer resin injection units 110 and the polymer resin sensing units 120.

The main body 101 may be formed in a circular shape. The main body 101 may be formed in a circular shape to easily overlap with the top of the high-integrity container 10, which has a cylindrical shape, but the shape of the main body 101 is not limited thereto.

The polymer resin injection units 110 are mounted on the main body 101. The polymer resin injection units 110 receive a polymer resin from the aforementioned polymer resin storage unit and inject the polymer resin into the high-integrity container 10. For this purpose, the polymer resin injection units 110 may include discharge nozzles, which discharge the polymer resin into the high-integrity container 10. The polymer resin injection units 110 may be positioned to overlap with the top opening of the high-integrity container 10.

Referring to FIG. 3, the polymer resin discharged from the polymer resin injection units 110 is injected into the upper part of the radioactive waste 12. After a certain period of injection, the polymer resin is deposited to form a polymer resin layer 51. In other words, the polymer resin injection units 110 inject an immobilizing polymer resin onto the radioactive waste 12 loaded in the high-integrity container 10, forming the polymer resin layer 51.

The polymer resin may be formed as a photopolymerizable resin. The polymer resin may include an acrylate oligomer, a monomer, a photoinitiator, and other additives that enhance its properties. The acrylate oligomer may be selected from among urethane, epoxy, ester, ether, and silicon acrylate. Preferably, polyurethane acrylate, which is prepared by reacting diisocyanate, polyol, and methacrylate, may be used.

Specifically, the essential components of the oligomer may include a base material between urethane acrylate of the polycarbonate type and urethane acrylate of the polyester type, a monomer that binds to the polymer chain to enhance adhesion and cohesion with the radioactive waste 12, and a photoinitiator that promotes cross-linking of the base material, and these components may be mixed in a predetermined ratio.

The urethane acrylate in the base material is a mixture of urethane (-NHCOO-) and acrylate (-OCOHC=CH₂) to improve moldability and prevent cracking. To compensate for the disadvantages of urethane acrylate in terms of heat resistance and adhesion, epoxy acrylates and polyester acrylates may be additionally added.

Additionally, the monomer can enhance workability by adjusting the viscosity of the oligomer, improving adhesion, spreadability, and polymerization speed on the radioactive waste 12, and plays an important role in water resistance, moldability, dimensional stability during thermoforming, heat resistance, brittleness, thermal shock stability, and high-temperature and high-humidity stability. The monomer may be selected from among monofunctional, difunctional, trifunctional, and multifunctional acrylates.

The photoinitiator initiates the polymerization reaction of the oligomer, forming cross-links on the radioactive waste 12 to solidify and fix it. To promote UV polymerization reactions and improve the adhesion and cohesion of the oligomer, a photoinitiator such as alpha-hydroxy ketone, phenyl glyoxylate, or phosphine oxide may be used.

The polymer resin sensing units 120 are mounted on the main body 101. The polymer resin sensing units 120 measure the thickness of the polymer resin layer 51 and adjust the injection amount of the polymer resin. The polymer resin sensing units 120 may measure the thickness of the polymer resin layer 51 using a laser distance measurement method.

Referring to FIG. 4, the polymer resin sensing units 120 measure the thickness of the polymer resin layer 51 multiple thickness and adjust the injection amount of the polymer resin based on the average of the measurements. Specifically, the polymer resin sensing units 120 measure the thickness at various points of the polymer resin layer 51, obtain the thickness values at the various points, and determine the thickness of the polymer resin layer 51 based on the average of the obtained thickness values.

If the measured average thickness of the polymer resin layer 51 by the polymer resin sensing units 120 does not meet a preset thickness, it is necessary to increase the thickness of the polymer resin layer 51. In this case, the control unit of the main body 101 may activate the polymer resin injection units 110. Accordingly, the polymer resin injection units 110 may additionally inject the polymer resin into the high-integrity container 10. Afterward, the polymer resin sensing units 120 measure the thickness of the polymer resin layer 51 again, and if the measured thickness of the polymer resin layer 51 meets the preset thickness, no further injection of the polymer resin may be carried out.

In other words, when the polymer resin is injected into the high-integrity container 10 by the polymer resin injection units 110 and forms the polymer resin layer 51, the polymer resin sensing units 120 measure the thickness of the polymer resin layer 51. Then, if the thickness of the polymer resin layer does not meet the preset thickness, the polymer resin is additionally injected, and if the thickness of the polymer resin layer meets the preset thickness, the injection of the polymer resin is stopped, and the formed polymer resin layer is cured.

The light curing unit 130 is mounted on the main body 101. The light curing unit 130 cures the polymer resin layer 51.

Referring to FIG. 5, the light curing unit 130 may include a UV irradiation unit 131 and a rotation shaft 132. The UV irradiation unit 131 is coupled to one end of the rotation shaft 132, and the other end of the rotation shaft 132 is coupled to the main body 101. The main body 101 may include a driving unit, which rotates the rotation shaft 132.

Meanwhile, the light curing unit 130 may rotate over the polymer resin layer 51 to cure the polymer resin layer 51 uniformly. That is, when the rotation shaft 132 of the light curing unit 130 rotates, the UV irradiation unit 131, coupled to one end of the rotation shaft 132, may also rotate. The rotation of the UV irradiation unit 131 allows the polymer resin layer 51 to be cured uniformly by the UV irradiation unit 131. The rotation shaft 132 may rotate around the center of the high-integrity container 10. Accordingly, the UV irradiation unit 131 may rotate around the center of the high-integrity container 10. In other words, the entire light curing unit 130 may rotate around the center of the high-integrity container 10.

Specifically, when UV light is irradiated onto the polymer resin layer 51 by the UV irradiation unit 131 of the light curing unit 130, the photoinitiator initiates a polymerization reaction, and the polymer resin layer 51 is uniformly cured through a UV curing mechanism.

That is, through the UV curing mechanism of free radical polymerization, the polymer resin layer 51 forms cross-links and thereby solidifies and is UV-cured. Here, the UV irradiation unit 131 may be any one of a metal lamp, a mercury lamp, and an LED lamp.

Meanwhile, this light curing process may be repeated several times to ensure the immobilization of the polymer resin layer 51.

A radioactive waste immobilization method according to an embodiment of the present invention will hereinafter be described with reference to FIGS. 1 through 6. The radioactive waste immobilization method of the present invention is for immobilizing the upper part of radioactive waste within a high-integrity container to prevent the potential leak of radioactive waste to the outside.

Referring to FIGS. 1 and 3, a polymer resin for immobilization is injected onto the radioactive waste 12 loaded in the high-integrity container 10 to form the polymer resin layer 51 (S10). The polymer resin may be injected through the aforementioned polymer resin injection units 110. The polymer resin is substantially the same as previously described, and thus, a repeated description thereof will be omitted.

Continuing with reference to FIGS. 1 and 4, the injection amount of the polymer resin is adjusted by measuring the thickness of the polymer resin layer 51 (S20). The thickness of the polymer resin layer 51 may be measured through the aforementioned polymer resin sensing units 120.

In step S20, the adjusting of the injection amount of the polymer resin involves taking multiple measurements of the thickness of the polymer resin layer 51 and adjusting the injection amount of the polymer resin based on the average of the multiple measurements. Specifically, if the average value does not meet the preset thickness, the polymer resin may be additionally injected. Conversely, if the average value meets the preset thickness, the additional injection of the polymer resin may be stopped.

Continuing with reference to FIGS. 1 and 5, the curing of the polymer resin layer 51 is performed (S30). The curing of the polymer resin layer 51, i.e., step S30, may be performed repeatedly. Through this step, the polymer resin layer formed by the injection of the polymer resin can be immobilized. As a result, the formation of the polymer resin layer 51 that immobilizes the radioactive waste 12 can be completed (see FIG. 6). By forming the polymer resin layer 51, the upper part of the radioactive waste 12 can be sealed within the high-integrity container 10.

According to the present invention, the upper part of the radioactive waste 12 loaded in the high-integrity container 10 can be immobilized by the polymer resin. This enhances and improves the safety of storing the radioactive waste. In particular, it can prevent the radioactive waste from leaking to the outside in the event of an accident, such as the drop of the high-integrity container or damage to its cover.

Although the embodiments of the present invention have been described above with reference to the accompanying drawings, those skilled in the art will understand that the present invention can be implemented in other specific forms without changing its technical spirit or essential features. Therefore, the embodiments described above should be understood as illustrative rather than restrictive in all respects.

## Claims

1. An apparatus for immobilizing the upper part of radioactive waste loaded in a high-integrity container to prevent the possibility of the radioactive waste leaking to the outside, comprising:
a polymer resin injection unit forming a polymer resin layer by injecting an immobilizing polymer resin onto the radioactive waste loaded in the high-integrity container;
a polymer resin sensing unit adjusting an injection amount of the polymer resin by measuring a thickness of the polymer resin layer; and
a light curing unit curing the polymer resin layer.

2. The apparatus of claim 1, wherein the polymer resin includes an acrylate oligomer, a monomer, and a photoinitiator.

3. The apparatus of claim 1, wherein the polymer resin sensing unit takes multiple measurements of the thickness of the polymer resin layer and adjusts the injection amount of the polymer resin using an average of the multiple measurements.

4. The apparatus of claim 3, wherein if the average of the measurements does not meet a preset thickness, the polymer resin injection unit additionally injects the polymer resin.

5. The apparatus of claim 1, wherein the light curing unit rotates over the polymer resin layer to cure the polymer resin layer uniformly.

6. The apparatus of claim 5, wherein the light curing unit rotates around a center of the high-integrity container.

7. A method for immobilizing the upper part of radioactive waste loaded in a high-integrity container to prevent the possibility of the radioactive waste leaking to the outside, comprising:
a) forming a polymer resin layer by injecting an immobilizing polymer resin onto the radioactive waste loaded in the high-integrity container;
b) adjusting an injection amount of the polymer resin by measuring a thickness of the polymer resin layer; and
c) curing the polymer resin layer.
